Europäisches Patentamt

European Patent Office

Office européen des brevets

(11) Publication number: **0 166 271 B1**

## EUROPEAN PATENT SPECIFICATION

(45) Date of publication of patent specification: **18.12.91**　(51) Int. Cl.⁵: **G06K 9/78**

(21) Application number: **85106830.4**

(22) Date of filing: **03.06.85**

(54) Recognition system for run-on handwriting.

(30) Priority: **29.06.84 US 626254**

(43) Date of publication of application:
**02.01.86 Bulletin 86/01**

(45) Publication of the grant of the patent:
**18.12.91 Bulletin 91/51**

(84) Designated Contracting States:
**CH DE FR GB IT LI NL**

(56) References cited:
**EP-A- 0 127 441**
**US-A- 4 365 235**

**PROCEEDINGS OF THE INTERNATIONAL
CONFERENCE ON PATTERN RECOGNITION,
October 1982, Munich, pages 34-36, IEEE,
New York, US; A.AMIN: "Machine recognition
of hand written arabic words by the IRAC II
System"**

(73) Proprietor: **International Business Machines
Corporation
Old Orchard Road
Armonk, N.Y. 10504(US)**

(72) Inventor: **Tappert, Charles Carson
Beach Road
Ossining New York 10562(US)**

(74) Representative: **Killgren, Neil Arthur
IBM United Kingdom Limited Intellectual
Property Department Hursley Park
Winchester Hampshire SO21 2JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is related to the field of character recognition and specifically to systems for recognizing run-on handwritten characters. In recognition systems utilizing handwritten characters as input, an important consideration is the recognition of individual letters which may be formed using segments which run-on neighboring letters. A major problem in such recognition systems is the segmentation of the words into characters which may be suitable for a recognition algorithm which operates on characters. Techniques of whole word recognition are possible but highly impractical.

Run-on handwritten characters are handwritten characters which are run together, that is, they can touch or overlap one another. Although only adjacent characters normally display this touching or overlapping, more distant characters can also take on this characteristic. For example, a t-crossing can sometimes overlap several adjacent characters. Handprinting often has this run-on characteristic and is normally characterized by both touching and overlapping characters. Cursive script writing can also be considered run-on handwriting. The individual characters can be considered to touch through their connections by ligatures. Furthermore, the characters in cursive writing can overlap. As with handprinting such overlap usually involves adjacent characters and again t is an example of where this occurs with relatively high frequency.

The reason run-on handwriting is difficult for automatic recognition procedures is that the characters cannot be easily or accurately separated one from another. In order to segment the characters from each other some recognition is required, and in order to recognize the characters some segmentation is required. Therefore, these two processes of segmentation and recognition are not independent but are heavily interrelated. Nevertheless, prior work in this area was directed toward the development of essentially separate procedures for the segmentation and subsequent recognition of the characters. This is referred to as the segmentation-then-recognition approach.

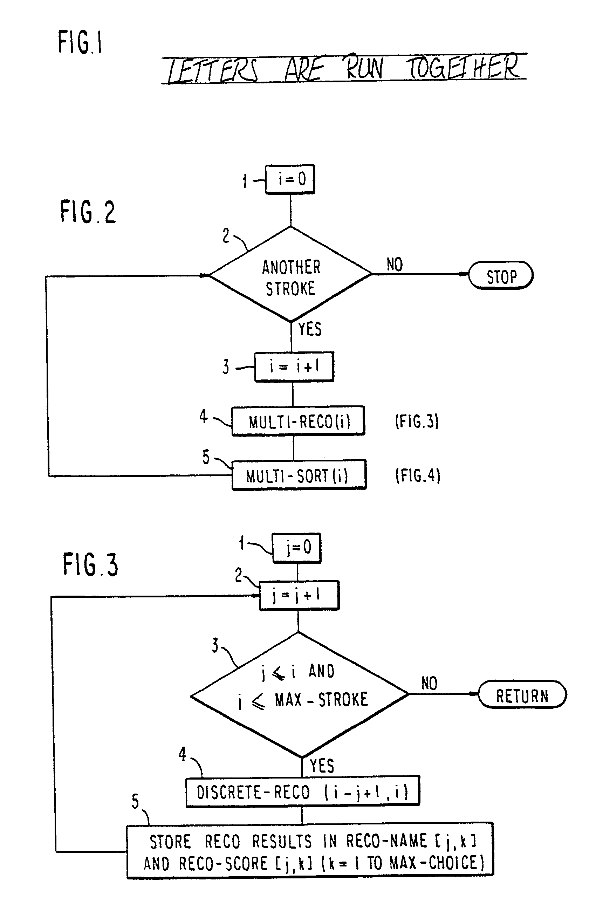

Reference is made to U.S. Patent 3,111,646 relating to a method and apparatus for reading cursive script. The algorithm and hardware for implementation presupposes that the writing itself be well-proportioned. Consequently, the segmentation algorithm is unduly restrictive. Specifically, the algorithm determines various zones by taking the overall height of an entire line from the base of the descenders to the peaks of the ascenders and divides the heights as shown in Figs. 1 and 24 into four parts for use in the recognition system. Consequently, the algorithm requires that the input be very well proportioned and that the writing not slope or deviate from the base line. Handwriting, however, is highly variable; in practice, the heights of ascenders and descenders are simply matters of personal style and subject to nearly infinite variations. The absolute length of an ascender or descender is not of great importance to humans in their handwriting styles. Consequently, the definition of well-proportioned handwriting is not a trait found in typical handwriting samples. The segmentation algorithm of U.S. Patent 3,111,646 is retrospective. In operation, an entire line of script is fed into storage registers and segmentation points are determined by first determining the average letter width based principally on the number of zero axis crossings.

This approach has a number of drawbacks in addition to the restrictions on input script. For example, the technique requires that the input be very well proportioned, that is that the writer maintain substantially the same letter width throughout. Secondly, the technique is not sequential. The prior art first segments the characters constituting the line then attempts recognition. For a practical system, it is important that segmentation and recognition be done in "real time". That is, an operative system should display the results as soon as possible after the character is formed.

Segmentation in itself is an extremely difficult problem when dealing with connected written script. The form of the ligature depends not only on the two characters being joined, the overall context, but additional general factors such as fatigue and physical conditions under which writing is done, that is sitting, standing or the like which may change the handwriting of an individual. The prior art contains examples of segmentation schemes for cursive script.

Reference is made to U.S. Patent 3,334,399, 3,305,832 and 4,024,500 all concerned with techniques of character segmentation in cursive script handwriting. Those systems are all predicated on ligatures being defined in essentially a continuum of the characters.

IBM Technical Disclosure Bulletin, Vol. 24, No. 6, pages 2897-2902, describes a system for recognizing discretely written characters based on elastic matching of an unknown character against a set of character prototypes. The input to the system is point data produced by a dynamic trace of a stylus on an electronic tablet. The hardware configuration is shown in Figure 1 of that TDB. Processing in accordance with this elastic matching system is performed on a character by character basis after the writing is separated into characters. The assumption of the recognition technique disclosed is that the characters are written with sufficient space between them to allow separation prior to recognition. Consequently, the algorithm described is a segmentation-then-recognition approach. Decoding utilizing this scheme cannot be accomplished where the characters run together. Other techniques utilizing segmentation followed by recognition are typified by U.S. Patent 3,713,100 and 3,784,982.

In an article by A. Amin entitled "Machine Recognition of Hand Written Arabic Words by the IRAC II System", published in the Proceedings of the International Conference on Pattern Recognition, October 1982, Munich at pages 34-46 by the IEEE, New York, US, an approach to character recognition including character segmentation has been described for Arabic characters. However, the article does not address how to recognise individual handwritten characters consisting of one or more strokes from a character group forming a word, wherein characters within the word may touch or overlap one another.

In accordance with a first aspect of the present invention there is provided, a method for machine recognition of individual handwritten characters consisting of one or more strokes from a character group forming a word, wherein characters within the word may touch or overlap one another, the method comprising the steps of:

a) determining, as potential characters, all stroke sequences within the word having a number of strokes between one and a predetermined maximum number;

b) examining, in a character recogniser, all potential character stroke sequences to determine candidate characters and scores corresponding to the candidate characters; and

c) sorting and combining the output of the character recogniser to determine candidate character strings, each string consisting of at least one character, and cumulative scores corresponding to the candidate character strings whereby the identities of individual handwritten characters may be derived from the candidate character strings utilizing the corresponding cumulative scores.

The invention also provides a method for machine recognition of individual handwritten characters consisting of one or more strokes from a plurality of character groups wherein each character group forms a word and wherein characters within a word may touch or overlap one another, the method comprising initially segmenting individual words and then, for each word, performing the steps of a method as defined above.

In accordance with a second aspect of the present invention, there is provided a character recognition system for recognising individual handwritten characters consisting of one or more strokes from a character group forming a word, wherein characters within the word may touch or overlap one another, the character recognition system comprising:

- trial segmentation logic for determining, as potential characters, all stroke sequences within the word having a number of strokes between one and a predetermined maximum number;
- a character recogniser for examining all potential character stroke sequences to determine candidate characters and scores corresponding to the candidate characters; and
- grading logic for sorting and combining the output of the character recogniser to determine candidate character strings, each string consisting of at least one character, and cumulative scores corresponding to the candidate character strings whereby the identities of individual handwritten characters may be derived from the candidate character strings utilizing the corresponding cumulative scores.

The invention also provides a character recognition system as defined above for recognising individual handwritten characters consisting of one or more strokes from a plurality of character groups, wherein each character group forms a word and wherein characters within a word may touch or overlap one another, the character recognition system comprising word segmentation logic for initially segmenting individual words.

The prior art techniques dealing with handwritten characters do not lend themselves to defining appropriate segmentation methodologies when dealing with run-on hand written characters. The problem of run-on is typical when dealing with hand printed characters. This invention is particularly applicable to recognising such handwritten characters consisting of one or more strokes from a character group, wherein characters within a word may touch or overlap one another. The invention departs from the prior art by a new approach to determining the end of one character and the beginning of the next where the characters are run-on or overlapped. Methodology employed by the present invention assumes that although the characters may overlap, each character is written discretely and completed before starting the next character. Because each character terminates at a stroke end, the present invention does not initially attempt to segment by characters, but rather considers all stroke ends as possible character segmentation points. Consequently, no potential character segmentation point is missed although there are extra tests made for characters consisting of more than one stroke.

This invention allows for stroke sequences up to a specified maximum number, defined as "max stroke" to be processed by the recognizer sub-system. At each potential segmentation point, the previous stroke, the previous two strokes, etc., up to the previous "max-stroke" strokes are delivered to the recognizer for potential recognition. During a sequence of recognition, the recognizer will produce a number of possible candidates for any given string of input data which is sorted and alternatively examined. This sorting and alternative examination applies the technique of "best cumulative score" to produce best word candidates.

The recognizer will provide multiple best word candidates. However, some strings of letters cannot be a part of a valid word. In accordance with the present invention, invalid best word candidates can be striken from the recognition processor by use of dictionary look-up. Furthermore, syntactic and semantic processing techniques can be applied in a situation where ambiguities arise and no clear choice can be made by the recognizer without the use of such contextual processing.

The approach taken by this invention is to operate on one handwritten word at a time and, within the processing of a word, to combine the segmentation and recognition steps into an overall scheme. It is assumed that the words are separated prior to processing by the proposed scheme. This separation can be performed in a number of ways. For example, a spatial segmenter could separate the words based on the spacing of the words. It is generally recognized that such segmentation of words is easy relative to the segmentation of characters within a word. Another method which could be employed to separate words would be to have the writer pause between the writing of the words and segment the words temporally. The critical notion here is to segment the handwritten words first and then perform the character segmentation and recognition operations in a combined manner on the word units.

Within the processing of a word the segmentation and recognition steps are combined into an overall scheme. Basically, this is accomplished by a three step procedure. First, potential or trial segmentation points are derived. This is done in a manner so as to ensure that essentially all true segmentation points are present but with the tradeoff that extra or not true segmentation points can be obtained as well. Second, all combinations of the segments that could reasonably be a character are sent to a character recognizer to obtain ranked choices and corresponding scores. Finally, the recognition results are sorted and combined so that the character sequences having the best cumulative scores are obtained as the best word choices. For a particular word choice there is a corresponding character segmentation, simply the segment combinations that resulted in the chosen characters. One of the main advantages of this recognition scheme is that the initial character segmentation is not final and need not be highly accurate, but is subject to a lesser constraint of containing all the true segmentation points.

This invention, which is defined in the attached claims, will be described in greater detail by referring to the drawings and the description of the preferred embodiment that follows.

Figure 1 is an example of run-on handprinted characters of the type subject to recognition in accordance with the present invention;

Figure 2 is a flow chart setting forth the main procedure utilized by this invention;

Figure 3 is a flow chart of the subroutine multi-reco set forth in the main procedure flow chart of Figure 2;

Figure 4 is a flow chart of the subroutine multi-sort as set forth in the flow chart of the main routine;

Figure 5 is a machine representation of the word "RUN" indicating the sequence of strokes; and

Figure 6 is a machine representation of the word "TOGETHER" indicating the sequence of stokes for that word.

An example of run-on handprinted characters of the type recognized by the present invention is illustrated in Figure 1. As represented thereon, various letters overlap with neighboring letters.

Prior concepts of segmentation whether it be for handwritten cursive script or discrete letters cannot handle the case of run-on letters. In accordance with this invention, a handwritten character is defined as one consisting of one or more strokes. A stroke is defined as the writing from a pendown position onto the writing surface to a pen-up position. Typically, the input device is in the form of an electronic pen and tablet of the type known in the prior art and disclosed in IBM/TDB volume 24, No. 6, pages 2897-2902. Such an electronic pen and tablet is typical of input devices that are well known in the prior art. In accordance with this invention, the system considers as potential character segmentation points all stroke ends within a word. Consequently, unlike techniques for deciphering script, the present invention recognizes resulting pieces and then combines the recognitions on a cumulative basis to obtain the best fitting sequence of characters for the word. The recognition procedure utilized relative to an individual piece is that set forth in the above reference IBM Technical Disclosure Bulletin.

Consequently, in accordance with this invention, while the characters themselves may overlap, it is assumed that each character is written discretely and that a character is completed before starting the next character. Unlike script writing where a word may be completed and then the author goes back and "dots the i's and crosses the t's", handwritten letters are generally completed one at a time. Thus, each character is written discretely and that character is completed in full before the next character is begun. Because each character in a handwritten letter terminates with a stroke end, the present invention considers all stroke ends as possible character segmentation points. Thus, no character segmentation point is missed, although it will be appreciated that there are extra ones for characters consisting of more than one stroke. The recognizer, as in the case of the prior cited IBM TDB utilizes prototypes consisting of characters. Some characters consist of several strokes and therefore various stroke sequences must be sent to the recognizer.

This invention allows for stroke sequences up to a maximum number of strokes. This maximum number denoted herein as "max-stroke" is predetermined and allows for setting of stroke sequences to be processed by the recognizer. The number utilized as "max-stroke" is set to be the maximum number of strokes of a character in the alphabet employed. Thus, at each potential segmentation point, the preceding stroke and the preceding two strokes, etc., up to the preceding number denoted as "max-stroke" strokes are sent to the recognizer. The system is, therefore, variable depending on the alphabet which is being recognized. The recognizer's candidate characters and scores are then sorted and the sequences of candidate characters yielding the best cumulative scores are output as the best scoring candidates. Thus, in accordance with the present invention, the scores are determined as the difference between the candidate and the prototype.

By referring to Figure 2, a flow chart of the main procedure utilizing this invention is depicted.

The current stroke number is controlled by i. This is also the current segmentation point index. For each stroke, the segmentation point is the last coordinate point of the stroke. In line 1, the stroke index "i" is initialized to 0 to begin the routine. A request is made for another stroke of the word, line 2. If there are no further strokes of the word, processing terminates. Otherwise, the stroke index is incremented by 1 in line 3. The routine continues utilizing the subroutine "multi-reco" in line 4. This subroutine, shown in Figure 3, performs various recognitions on stroke sequences ending with stroke i.

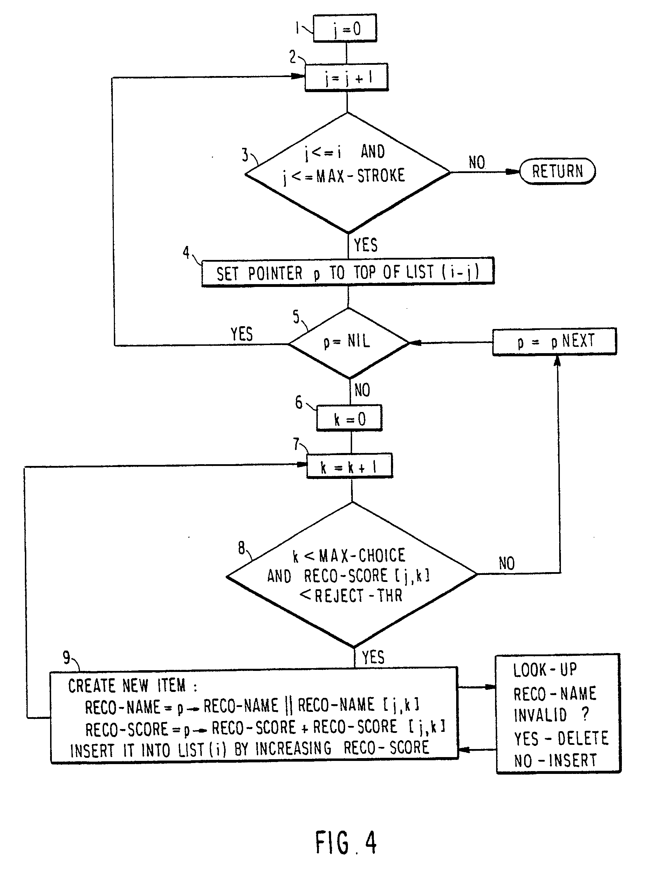

The last step (line 5) in the main routine utilizes the subroutine multi-sort. This subroutine, shown in Figure 4, sorts various recognition results. Following the multi-sort subroutine processing continues in an iterative manner by receiving a subsequent stroke, indexing the index of segmentation points, and invoking the subroutines, such that for each segmentation point of the word an iterative process occurs. When processing terminates, the word choices are simply character string choices found in the last list generated by this subroutine.

Referring now to Figure 3, operation of the subroutine multi-reco will be described. The number of strokes to be sent to the character recognizer is controlled by "j". The number of strokes is initially set to 0 in line 1 and then incremented by 1 in line 2 and tested to see if the number of strokes exceeds the preset max-stroke. The test, as shown in line 3, is such that if "j" exceeds max-stroke or if "j" exceeds "i", processing terminates and a return is made to the main program, shown in Figure 2, so that the next step, multi-sort, can be accomplished.

A subroutine "discrete-reco" is called in line 4 to process the sequence of "j" strokes from stroke i-j + 1 to stroke i. This subroutine is disclosed in IBM Technical Disclosure Bulletin, Vol. 24, No. 6, pages 2897-2902.

This subroutine processes the sequence of j strokes ending in the i-th stroke. The results are a listing of candidate characters and scores for the number of candidate choices from the discrete-reco subroutine. The number of candidate choices is shown in Figure 3 at "max-choice". Thus, a matrix is formed in line 5 wherein the reco results are determined in terms of the array of candidate characters, "reco-name", and the array of scores corresponding to candidate characters, "reco-score". The subroutine shown in Figure 3 is iterative such that processing continues until all stroke sequences up to the max-stroke are processed.

Referring now to Figure 4, the subroutine multi-sort is illustrated. This subroutine is employed to generate cumulative scores as processing continues. Thus, following each stroke, determination is made of the best character sequence choices up to and including that stroke. The index "j" is used here to access the recognition results from the processing of "j" strokes by subroutine multi-reco. The index j is initialized to 0 in line 1, incremented by 1 in line 2, and tested in line 3 to determine whether it exceeds the preset max-stroke. If j exceeds "max-stroke" or if j exceeds i, processing terminates and a return is made to the main program shown in Figure 2. As shown in line 4, pointer p is set to the top of the list of cumulative recognition results up to and including stroke (i-j). Data items on the list then consist of a character sequence, termed "reco-name", a cumulative score, termed "reco-score", and a pointer to the next item, p next. In line 5, p is tested to determine whether it is NIL and, if so, processing is then iterated back to line 2 where j is incremented. Otherwise, processing continues to build up the list (i). Choice index (k) is intialized to 0 in line 6 and is incremented by 1 in the succeeding line. It is then tested to determine whether it is less than max-choice and whether the current reco-score is less than a reject threshold. This is shown in line 8 of the subroutine. If k is less than max-choice and if the current reco-score is less than the reject threshold, a new item is created and inserted into the list (i) in order of increasing reco-score. This is illustrated in line 9. Otherwise, p is set to p next and processing returns to line 5.

In accordance with the present invention, various techniques may be utilized to save storage in the system. For example, the number of items retained in the list generated by the subroutine multi-sort in Figure 4 need be only as many as the number of desired word choices. Also, although the number of lists created is equal to the number of segmentation points (strokes), only the previous max-stroke lists are required. Therefore, earlier ones are eliminated as the procedures steps through the strokes.

Additionally, dictionary look-up and syntactic and semantic processing may be used to eliminate letter-chain choices for which no valid word exists. Thus, as items are created, they may be tested to determine whether a valid word can be generated utilizing the letter combination represented in that item. By this technique, storage requirements may be minimized.

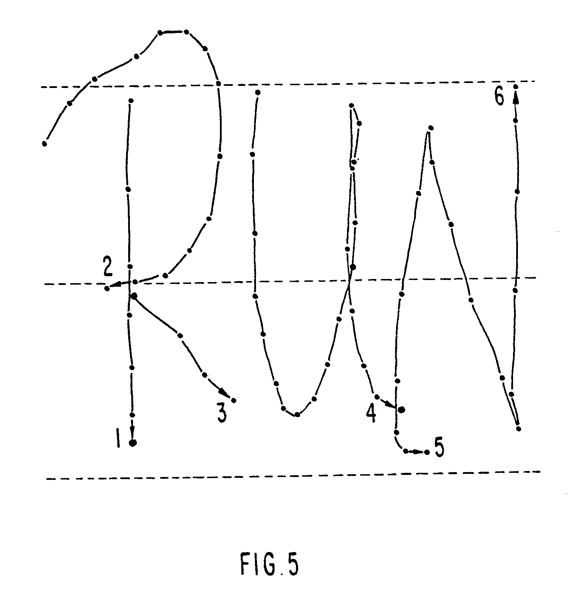

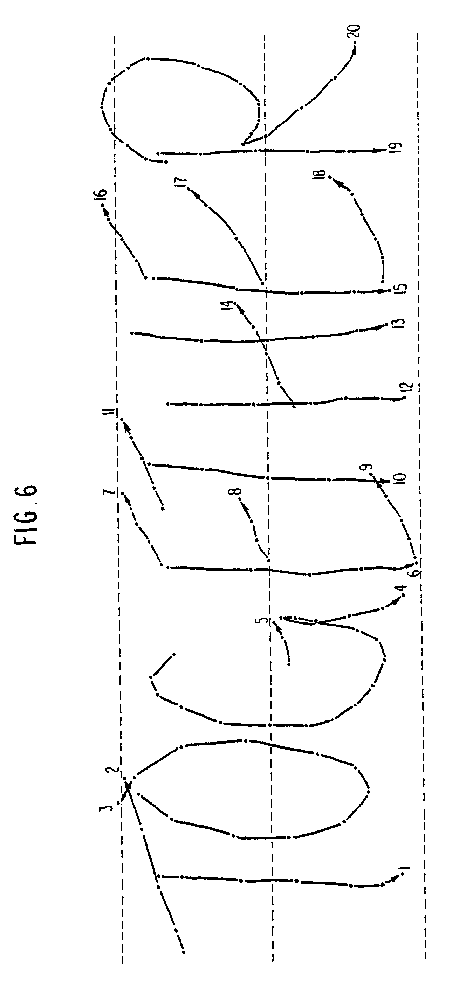

Two examples of the processing performed by this invention will be described relative to the words "RUN" shown in Figure 5 and "TOGETHER" shown in Figure 6. Figure 5 illustrates a machine representation of the run-on word "RUN" shown in Figure 1. Note that in this word, the characters U and N overlap. This description will be made in the context of the following table which is the recognition output for the word "RUN".

<u>RUN</u>

| Stroke 1 | 1<br>L ( 90)<br>i (142) | | | |
| L    90 | i   142 | | | |

| Stroke 2 | 2<br>P (298) | 1-2<br>P (170)<br>D (246)<br>F (342) | | |
| P    170 | D   246 | F   342 | R   343 | LP   388 |

| Stroke 3 | 3 | 2-3<br>R (294)<br>Z (336) | 1-2-3<br>R (222)<br>B (346)<br>P (349) | |
| R    222 | B   346 | P   349 | D   364 | LR   384 |

| Stroke 4 | 4<br>U (123)<br>u (235)<br>d (253) | 3-4<br>U (327)<br>u (383)<br>d (417) | 2-3-4<br>Q (811) | 1-2-3-4 |
| RU   345 | Ru   457 | BU   469 | PU   472 | Rd   476 |

| Stroke 5 | 5<br>L (69)<br>c (142)<br>o (151) | 4-5<br>U (297)<br>u (380)<br>d (412) | 3-4-5<br>U (475)<br>u (540)<br>d (559) | 2-3-4-5 |
| RUL   414 | RUc   487 | RUo   496 | RUi   499 | RU   520 |

| Stroke 6 | 6<br>V (89)<br>r (150)<br>v (153) | 5-6<br>N (147)<br>V (291)<br>W (291) | 4-5-6<br>W (567)<br>m (862) | 3-4-5-6<br>W (799) |
| RUN   492 | RULV   503 | RULr   564 | RUcV   576 | RULv   567 |

As shown in Figure 5, the word consists of six strokes which are numbered. The first stroke is the vertical downward line. The Table shows that for the first stroke, the recognizer assigned scores for a L of 90 and for a i of 142. Given the fact that only 1 stroke was involved, the summary line prints out the two candidate characters and those associated scores as the output of the multi-sort routine.

The second stroke, as shown in Figure 5, is the clockwise half loop. Considering the second stroke, the system then classifies the second stroke alone and the combination of the first and second strokes. Classifications of preceding stroke sequences up to the max-stroke limit are then assessed with the best character string choices determined after completion of the stroke just prior to the classified strok sequence. In this particular example, the max-stroke limit is 4, as illustrated relative to strokes 4, 5 and 6. The multi-sort routine then considers the lowest cumulative score and sets forth the candidate characters. Operation proceeds considering, for example, after stroke 6 the single stroke itself as shown in Figure 5, would be recognized as a V. However, the stroke sequence of strokes 5 and 6 is recognized as a N. The current best character string choices represent the lowest cumulative scores obtained. For example, in stroke 4, the RU sequence is a combination of the R choice relative to stroke 3 having a cumulative score of 222 and the U choice in stroke 4 having a score of 123, yielding a cumulative score of 345. This is then assessed by the multi-sort subroutine as the best character string choice to that point. In stroke 6, the word RUN is assessed as the combination of RU relative to cumulative score of 345 at stroke 4 and the recognized N in strokes 5-6, with a score of 147, yielding a composite score of 492.

As shown in the above Table, the best word choices following the sixth stroke are RUN, RULV, etc. For sake of clarity, in this Table, the printing of recognition choices of stroke sequence was limited to 3 and printing of the best character sequences limited to 5. The system is capable of retaining more information. Also, as noted, the alphabet was limited to upper and lower case printed characters in this example. Again, using elastic matching techniques, other characters may be input for recognition.

A second example, the use of the character recognition scheme in accordance with this invention, is illustrated in Figure 6 wherein the word TOGETHER has been printed in a run-on form. Note that the adjacent characters T and O and also E and T overlap. The word as formed has 20 segmentation strokes. Each of those strokes is analyzed and shown in the following Table in a manner identical to the analysis of RUN in the preceding example. The analysis is simply extended given the fact that twenty strokes, instead of six, are involved.

TOGETHER

---

Segment 1    1
             L  (  87)
             Y  ( 131)
L 87     Y 131

---

Segment 2    2           1-2
                         T  (  90)
                         J  ( 142)
                         V  ( 219)
T 90     J 142     V 219

---

Segment 3    3           2-3        1-2-3
             O  ( 120)   O (352)    N ( 355)
             V  ( 174)   V (368)    W ( 410)
             N  ( 213)
TO 210   JO  262     TV 264     TN 303   JV 317  VO 339

---

Segment 4    4           3-4        2-3-4       1-2-3-4
             Q  ( 267)   W ( 550)   W ( 769)
             G  ( 274)
             U  ( 292)
TOQ 476   TOG 484     TOU 501    JOQ 529    TVQ 531     JOG 537

---

Segment 5    5                      4-5        3-4-5       2-3-4-5
                                    G ( 236)   W ( 646)    W ( 855)
                                    U ( 393)
                                    Q ( 398)
TOG 445    JOG 498  TVG 500     TNG 539    JVG 552     VOG 575

---

Segment 6    6                      5-6        4-5-6       3-4-5-6
                                               G ( 466)
                                               U ( 484)
                                               Q ( 528)
TOG 676    TOU 693    JOG 729     TVG 730    TOQ 738     JOU 746

---

8

```
Segment 7      7              6-7      5-6-7      4-5-6-7
                              T (  99) T ( 230)   W ( 566)
                                       J ( 249)   G ( 653)
                                       V ( 251)
TOGT 544  JOGT 597  TVGT 599  TNGT 638  JVGT 651  VOGT 674


Segment 8      8              7-8      6-7-8      5-6-7-8
                                       F ( 162)   F ( 279)
                                       T ( 205)   T ( 323)
                                       P ( 225)   E ( 346)
TOGF 607  TOGT 650  JOGF 660  TVGF 662  TOGP 670  TOGE 678


Segment 9      9          8-9      7-8-9      6-7-8-9
                          L ( 194)             E ( 119)
                                               I ( 269)
                                               F ( 325)
TOGE 565  JOGE 618  TVGE 619  TNGE 658  JVGE 672  VOGE 694


Segment 10     10         9-10     8-9-10     7-8-9-10
               L (  98)
               Y ( 132)
TOGEL 663 TOGEY 697 JOGEL 716 TVGEL 717 JOGEY 750 TVGEY 751


Segment 11     11         10-11    9-10-11    8-9-10-11
                          T (  65)
                          J ( 149)
                          V ( 178)
TOGET 630 JOGET 682  TVGET 684 TOGEJ 714 TNGET 723  JVGET 737


Segment 12     12         11-12    10-11-12 9-10-11-12
               L (  96)             D ( 177)
               Y ( 124)             R ( 212)
                                    A ( 236)
TOGETL 726  TOGED 742  TOGETY 753  TOGER 777  JOGETL 779  TVGETL 780
```

| Segment 13 | 13 | 12-13 | 11-12-13 | 10-11-12-13 | | |
| | L ( 91) | K ( 112) | K ( 291) | M ( 289) | | |
| | | X ( 181) | Z ( 295) | D ( 402) | | |
| | | A ( 184) | Y ( 326) | A ( 419) | | |
| TOGETK 781 | JOGETK 794 | TVGETK 796 | TOGETX 810 | TOGETA 814 | TOGETLL 817 | |

| Segment 14 | 14 | 13-14 | 12-13-14 | 11-12-13-14 | | |
| | | V ( 189) | H ( 165) | H ( 334) | | |
| | | L ( 194) | A ( 179) | A ( 342) | | |
| | | T ( 207) | N ( 267) | K ( 442) | | |
| TOGETH 795 | TOGETA 809 | JOGETH 847 | TVGETH 849 | JOGETA 862 | TVGETA 863 | |

| Segment 15 | ·15 | 14-15 | 13-14-15 | 12-13-14-15 | | |
| | | | U ( 216) | M ( 334) | | |
| | | | D ( 281) | U ( 362) | | |
| | | | M ( 302) | H ( 381) | | |
| TOGETLU 942 | TOGEDU 958 | TOGETM 964 | TOGETYU 970 | TOGETU 992 | TOGERU 994 | |

| Segment 16 | 16 | 15-16 | 14-15-16 | 13-14-15-16 | | |
| | | T ( 71) | T ( 317) | N ( 431) | | |
| | | V ( 204) | | W ( 441) | | |
| | | F ( 205) | | | | |
| TOGETHT 866 | TOGETAT 880 | JOGETHT 918 | TVGETHT 920 | JOGETAT 933 | TVGETAT 934 | |

| Segment 17 | 17 | 16-17 | 15-16-17 | 14-15-16-17 | | |
| | | | F ( 143) | T ( 380) | | |
| | | | T ( 149) | F ( 380) | | |
| | | | P ( 196) | | | |
| TOGETHF 938 | TOGETHT 944 | TOGETAF 952 | TOGETAT 958 | JOGETHF 990 | TOGETHP 991 | |

| Segment 18 | 18 | 17-18 | 16-17-18 | 15-16-17-18 | | |
| | | | | E ( 163) | | |
| | | | | I ( 208) | | |
| | | | | F ( 275) | | |
| TOGETHE 958 | TOGETAE 972 | TOGETHI 1003 | JOGETHE 1010 | TVGETHE 1012 | TOGETAI 1017 | |

| Segment 19 | 19 | 18-19 | 17-18-19 | 16-17-18-19 | | |

| Segment 20 | 20 | 19-20 | 18-19-20 | 17-18-19-20 | | |
| | R ( 383) | R ( 199) | R ( 581) | R ( 712) | | |
| | Z ( 416) | B ( 367) | | U ( 723) | | |
| | | D ( 450) | | | | |
| TOGETHER 1157 | TOGETAER 1171 | TOGETHIR 1202 | JOGETHER 1210 | TVGETHER 1211 | TVGETAIR 1216 | |

With this example, it is apparent that by utilizing library look-up techniques and syntactic and semantic processors, invalid character combinations would eliminate a number of character candidate strings.

Thus, as described herein, this invention uniquely allows elastic matching techniques to be applied to hand written printed characters with overlapping or run-on characteristics. The method solves the problem of recognizing or determining the end of one character and the beginning of the next where the characters are run-on or overlapped by assuming that, although the characters may overlap, each is written discretely and is completed before starting the next character. Because printed characters by definition terminate at a stroke end, the present invention considers all stroke ends as possible character segmentation points. Thus, no potential character segmentation point is missed. It is clear, however, in the example of the word "TOGETHER" that extra tests are made for characters comprising more than a single stroke. Thus, in testing for those individual segments, a number of stroke combinations are made which are essentially irrelevant to the final word. The processing time is minimized as recognized herein by use of dictionary look-up techniques. Invalid character strings can be eliminated to reduce processing time and memory requirements.

This invention allows for stroke sequences up to a specified maximum denoted as "max-stroke" to be processed by the recognizer. In the two examples utlizing a hand written English alphabet, max-stroke is set to be 4. It is apparent, however, that the number may be varied depending on the alphabet which is employed. Thus, at each potential segmentation point, the tests are made of the current stroke, the current stroke plus the previous stroke, the current stroke plus the previous two strokes, the current stroke plus the previous three strokes, etc. up to max-stroke. Each combination is sent to the recognizer for potential character recognition. The invention then applies the technique of best cumulative score to produce a list of best word candidates. As the segments are processed, these best word candidates are maintained.

Although the described algorithm assumes that each character is completed before beginning the next, this constraint can also be relaxed. In normal handwriting, printing or script writing, a character is not always completed before beginning the next. Sometimes there are what can be referred to as delayed strokes. A delayed stroke is one which does not immediately follow the earlier stroke or strokes of the character. For example, the word "city" written in script generally has three strokes: the first is the main portion of the word, the second the dot of the i, and the third the cross of the t. In this example the second and third strokes are delayed. Nevertheless, it is generally possible to rearrange the strokes automatically so that the resulting stroke sequence is one that would be obtained from writing in a manner such that each letter is completed before beginning the next. An example of such stroke rearrangement has been disclosed in IBM/TDB Volume 26, No. 12, pages 6616-6617 May 2, 1984. By such stroke rearrangement it is possible to do away with the constraint that each character must be completed before beginning the next.

A further aspect of the invention is that the recognizer, by having various segmentations, provides alternate word choices for subsequent evaluation by such procedures as dictionary lookup and syntactic and semantic processors. This is particularly important where there is ambiguity to such a degree that no clear choice is possible without such high-level processing. For example, for cursive writing, and to some extent for printing as well, it is often not possible to distinguish between "d" and "cl" without context.

The procedure herein disclosed has been shown to operate effectively on run-on discretely written characters. In the examples shown the input contained only upper case handprinted characters.

The recognizer had prototypes for both upper and lower case in the RUN example and for only upper case in the TOGETHER example. It is clear that the technique is equally applicable to input lower case printed characters and to mixed upper and lower case. In fact, lower case handprinting is handled more easily by this technique since there are fewer strokes per character. Furthermore, the technique extends to an alphabet increased by the addition of punctuation symbols.

Finally, invention can be applied to cursive handwriting. The only addition required is a preliminary segmentation procedure that yields potential segmentations within strokes to give sub-strokes, such that true segmentation points are rarely missed at the expense of obtaining extra segmentation points. The resulting sub-strokes, or stroke segments, are then processed by the disclosed procedure as if they were strokes of handprinted characters.

**Claims**

1. A method for machine recognition of individual handwritten characters consisting of one or more strokes from a character group forming a word, wherein characters within the word may touch or overlap one another, the method comprising the steps of:
   a) determining, as potential characters, all stroke sequences within the word having a number of strokes between one and a predetermined maximum number;
   b) examining, in a character recogniser, all potential character stroke sequences to determine candidate characters and scores corresponding to the candidate characters; and
   c) sorting and combining the output of the character recogniser to determine candidate character strings, each string consisting of at least one character, and cumulative scores corresponding to the candidate character strings whereby the identities of individual handwritten characters may be derived from the candidate character strings utilizing the corresponding cumulative scores.

2. A method as claimed in Claim 1 wherein steps (a), (b) and (c) are performed iteratively at successive trial segmentation points which are defined at successive stroke ends within the word until all strokes have been processed.

3. A method as claimed in Claim 2 wherein in step (b), at each trial segmentation point, the character recogniser sequentially examines each potential character stroke sequence ending at the current trial segmentation point until all potential character stroke sequences ending at the current trial segmentation point have been examined.

4. A method as claimed in Claim 2 or Claim 3 wherein in step (c), at each trial segmentation point, a list of candidate character strings is assembled, the list being ordered in accordance with the corresponding cumulative scores.

5. A method as claimed in Claim 4 wherein the list of candidate character strings is constrained to contain not more than a selected number of candidate character strings.

6. A method as claimed in Claim 4 or Claim 5 wherein in step (c) candidate character strings are compared to a list of acceptable character strings and candidate character strings having no corresponding acceptable character strings are eliminated from the list of candidate character strings.

7. A method for machine recognition of individual handwritten characters consisting of one or more strokes from a plurality of character groups wherein each character group forms a word and wherein characters within a word may touch or overlap one another, the method comprising initially segmenting individual words and then, for each word, performing the steps of a method as claimed in any preceding Claim.

8. A character recognition system for recognising individual handwritten characters consisting of one or more strokes from a character group forming a word, wherein characters within the word may touch or overlap one another, the character recognition system comprising:
   - trial segmentation logic for determining, as potential characters, all stroke sequences within the word having a number of strokes between one and a predetermined maximum number;
   - a character recogniser for examining all potential character stroke sequences to determine candidate characters and scores corresponding to the candidate characters; and
   - grading logic for sorting and combining the output of the character recogniser to determine candidate character strings, each string consisting of at least one character, and cumulative scores corresponding to the candidate character strings whereby the identities of individual handwritten characters may be derived from the candidate character strings utilizing the corresponding cumulative scores.

9. A character recognition system as claimed in Claim 8 wherein the trial segmentation logic, the character recogniser and the grading logic operate iteratively at successive trial segmentation points which are defined at successive stroke ends within the word until all strokes have been processed.

10. A character recognition system as claimed in Claim 9 wherein the character recogniser sequentially examines, at each trial segmentation point, each potential character stroke sequence ending at the current trial segmentation point until all potential character stroke sequences ending at the current trial segmentation point have been examined.

11. A character recognition system as claimed in Claim 9 or Claim 10 wherein the grading logic assembles a list of candidate character strings, the list being ordered in accordance with the corresponding cumulative scores.

12. A character recognition system as claimed in Claim 11 wherein the list of candidate character strings is constrained to contain not more than a selected number of candidate character strings.

13. A character recognition system as claimed in Claim 11 or Claim 12 wherein the grading logic compares each candidate character string to a list of acceptable character strings and candidate character strings having no corresponding acceptable character strings are eliminated from the list of candidate character strings.

**14.** A character recognition system as claimed in any one of claims 8 to 13 for recognising individual handwritten characters consisting of one or more strokes from a plurality of character groups, wherein each character group forms a word and wherein characters within a word may touch or overlap one another, the character recognition system comprising word segmentation logic for initially segmenting individual words.

**Revendications**

1. Méthode pour la reconnaissance par machine de caractères manuscrits individuels consistant en un ou plusieurs traits, à partir d'un groupe de caractères formant un mot, les caractères du mot pouvant se toucher ou se chevaucher, la méthode comprenant les étapes de :

(a) détermination, comme caractères potentiels, de toutes les séquences de traits dans le mot qui ont un nombre de traits compris entre un et un nombre maximal prédéterminé ;

(b) examen, dans un identificateur de caractère, de toutes les séquences de traits de caractères potentiels pour déterminer des caractères candidats et des notes de valeur correspondant aux caractères candidats ; et

(c) tri et combinaison de la sortie de l'identificateur de caractère pour déterminer des chaînes de caractères candidats, chaque chaîne consistant en au moins un caractère, et des notes de valeur cumulatives correspondant aux chaînes de caractères candidats, de sorte que les identités des caractères manuscrits individuels peuvent être obtenues à partir des chaînes de caractères candidats en utilisant les notes cumulatives correspondantes.

2. Méthode suivant la revendication 1, dans laquelle les étapes (a), (b) et (c) sont exécutées itérativement à des points de segmentation d'essai successifs qui sont définis aux extrémités des traits successifs dans le mot, jusqu'à ce que tous les traits aient été traités.

3. Méthode suivant la revendication 2, dans laquelle, à l'étape (b), à chaque point de segmentation d'essai, l'identificateur de caractère examine séquentiellement chaque séquence de traits de caractère potentiel, au point de segmentation d'essai en cours, jusqu'à ce que toutes les séquences de traits de caractère potentiel se terminant au point de segmentation d'essai en cours aient été examinées.

4. Méthode suivant la revendication 2 ou la revendication 3, dans laquelle, à l'étape (c), à chaque point de segmentation d'essai, une liste de chaînes de caractères candidats est assemblée, la liste étant classée en fonction des notes cumulatives correspondantes.

5. Méthode suivant la revendication 4, dans laquelle la liste de chaînes de caractères candidats est limitée de manière à ne pas contenir plus qu'un nombre choisi de chaînes de caractères candidats.

6. Méthode suivant la revendication 4 ou la revendication 5, dans laquelle, à l'étape (c), les chaînes de caractères candidats sont comparées à une liste de chaînes de caractères acceptables, et les chaînes de caractères candidats qui n'ont pas de chaînes de caractères acceptables correspondantes sont éliminées de la liste des chaînes de caractères candidats.

7. Méthode pour la reconnaissance par machine de caractères manuscrits individuels consistant en un ou plusieurs traits, à partir d'une pluralité de groupes de caractères, chaque groupe de caractères formant un mot et les caractères d'un mot pouvant se toucher ou se chevaucher, la méthode comprenant la segmentation initiale de mots individuels et ensuite, pour chaque mot, l'exécution des étapes d'une méthode suivant l'une quelconque des revendications précédentes.

8. Système de reconnaissance de caractères pour reconnaître des caractères manuscrits individuels consistant en un ou plusieurs traits, à partir d'un groupe de caractères formant un mot, les caractères du mot pouvant se toucher ou se chevaucher, le système de reconnaissance de caractères comprenant :

- une logique de segmentation d'essai pour déterminer, comme caractères potentiels, toutes les séquences de traits dans le mot qui ont un nombre de traits compris entre un et un nombre maximal prédéterminé ;
- un identificateur de caractère pour examiner toutes les séquences de traits de caractères potentiels afin de déterminer des caractères candidats et des notes de valeur correspondant aux caractères candidats;et

- une logique de classement pour trier et combiner la sortie de l'identificateur de caractère afin de déterminer des chaînes de caractères candidats, chaque chaîne consistant en au moins un caractère, et des notes de valeur cumulatives correspondant aux chaînes de caractères candidats, de sorte que les identités des caractères manuscrits individuels peuvent être obtenues à partir des chaînes de caractères candidats en utilisant les notes cumulatives correspondantes.

9. Système de reconnaissance de caractères suivant la revendication 8, dans lequel la logique de segmentation d'essai, l'identificateur de caractère et la logique de classement agissent itérativement à des points de segmentation d'essai successifs qui sont définis aux extrémités de traits successifs dans le mot, jusqu'à ce que tous les traits aient été traités.

10. Système de reconnaissance de caractères suivant la revendication 9, dans lequel l'identificateur de caractère examine séquentiellement, à chaque point de segmentation d'essai, chaque séquence de traits de caractère potentiel se terminant au point de segmentation d'essai en cours, jusqu'à ce que toutes les séquences de traits de caractère potentiel se terminant au point de segmentation d'essai en cours aient été examinées.

11. Système de reconnaissance de caractères suivant la revendication 9 ou la revendication 10, dans lequel la logique de classement assemble une liste de chaînes de caractères candidats, la liste étant classée conformément aux notes cumulatives correspondantes.

12. Système de reconnaissance de caractères suivant la revendication 11, dans lequel la liste de chaînes de caractères candidats est limitée de manière à ne pas contenir plus qu'un nombre choisi de chaînes de caractères candidats.

13. Système de reconnaissance de caractères suivant la revendication 11 ou la revendication 12, dans lequel la logique de classement compare chaque chaîne de caractères candidats à une liste de chaînes de caractères acceptables, et les chaînes de caractères candidats qui n' ont pas de chaînes de caractères acceptables correspondantes sont éliminées de la liste de chaînes de caractères candidats.

14. Système de reconnaissance de caractères suivant l'une quelconque des revendications 8 à 13 pour reconnaître des caractères manuscrits individuels consistant en un ou plusieurs traits à partir d'une pluralité de groupes de caractères, chaque groupe de caractères formant un mot et les caractères d'un mot pouvant se toucher ou se chevaucher, le système de reconnaissance de caractères comprenant une logique de segmentation de mot pour la segmentation initiale de mots individuels.

**Patentansprüche**

1. Verfahren zur Maschinenerkennung einzelner handgeschriebener Zeichen, die aus einem oder mehreren Strichen aus einer Zeichengruppe bestehen, die ein Wort bildet, bei welchem Zeichen innerhalb des Wortes einander berühren oder überlappen können, wobei das Verfahren die folgenden Schritte umfaßt:

a) Bestimmen aller Strichfolgen innerhalb des Worte, das eine Anzahl von Strichen zwischen eins und einer vorbestimmten maximalen Zahl aufweist als mögliche Zeichen,

b) Prüfen aller möglichen Zeichenstrichfolgen in einem Zeichenerkenner, um Kanditatenzeichen und den Kanditatenzeichen entsprechende Punktzahlen zu bestimmen und

c) Sortieren und Kombinieren des Ausganges des Zeichenerkenners, um Kanditatenzeichenketten zu bestimmen, wobei jede Kette aus zumindest einem Zeichen und kumulativen Punktzahlen besteht, welche den Kanditatenzeichenketten entsprechen, wodurch die Identitäten einzelner, handgeschriebener Zeichen aus den Kanditatenzeichenketten unter Verwendung der entsprechenden kumulativen Punktzahlen erhalten werden können.

2. Verfahren nach Anspruch 1, bei welchem die Schritte (a), (b) und (c) iterativ, bei aufeinander folgender, an aufeinander folgenden Strichenden innerhalb des Wortes definierten Versuchssementierungsstellen solange durchgeführt werden, bis alle Striche verarbeitet wurden.

3. Verfahren nach Anspruch 2, bei welchem der Zeichenerkenner bei dem Schritt (b), bei jeder Versuchssegmentierungsstelle jede mögliche an der augenblicklichen Versuchsegmentierungsstelle endende, Zeichenstrichfolge sequentiell solange prüft, bis alle möglichen Zeichenstrichfolgen an der augenblicklichen Versuchsegementierungsstelle geprüft wurden.

4. Verfahren nach Anspruch 2 oder Anspruch 3, bei welchem eine Liste von Kanditatenzeichenketten bei dem Schritt (c), bei jeder Versuchssegementierungsstelle zusammengestellt wird, wobei die Liste gemäß den entsprechenden kumulativen Punktzahlen geordnet ist.

5. Verfahren nach Anspruch 4, bei welchem die Liste von Kanditatenzeichenketten eingeengt ist, um nicht mehr als eine ausgewählte Anzahl von Kanditatenzeichenketten zu enthalten.

6. Verfahren nach Anspruch 4 oder Anspruch 5, bei welchem die Kanditatenzeichenketten bei dem Schritt (c) mit einer Liste annehmbarer Zeichenketten verglichen werden und Kanditatenzeichenketten mit keinen entsprechenden annehmbaren Zeichenketten aus der Liste von Kanditatenzeichenketten entfernt werden.

7. Verfahren zur Maschinenerkennung einzelner handgeschriebener Zeichen, die aus einem oder mehreren Strichen aus einer Mehrzahl von Zeichengruppen bestehen, bei welchem jede Zeichengruppe ein Wort bildet und bei welchem Zeichen innerhalb eines Wortes einander berühren oder überlappen können, wobei das Verfahren das anfängliche Segmentieren einzelner Wörter und sodann das Durchführen der Schritte eines Verfahrens nach irgend einem vorhergehenden Anspruch für jedes Wort umfaßt.

8. System zur Zeichenerkennung einzelner handgeschriebener Zeichen, die aus einem, oder mehreren Strichen aus einer Zeichengrpupe bestehen, die ein Wort bildet, bei welchem Zeichen innerhalb des Wortes einander berühren oder überlappen können, wobei das System zur Zeichenerkennung aufweist:

eine Versuchsegmentierungslogik zum Bestimmen aller Strichfolgen innerhalb des Wortes, das eine Anzahl von Strichen zwischen eins und einer vorbestimmten maximalen Zahl aufweist als mögliche Zeichen,

einen Zeichenerkenner zum Prüfen aller möglichen Zeichenstrichfolgen, um Kanditatenzeichen und den Kanditatenzeichen entsprechende Punktzahlen zu bestimmen und

eine Einteilerlogik zum Sortieren und Kombinieren des Ausganges des Zeichenerkenners, und Kanditatenzeichenketten zu bestimmen, wobei jede Kette aus zumindest einem Zeichen und kumulativen Punktzahlen besteht, welche den Kanditatenzeichenketten entsprechen, wodurch die Identitäten einzelner, handgeschriebener Zeichen aus den Kanditatenzeichenketten unter Verwendung der entsprechenden kumulativen Punktezahlen erhalten werden können.

9. System zur Zeichenerkennung nach Anspruch 8, bei welchem die Versuchssegementierungslogik, der Zeichenerkenner und die Einteilerlogik iterativ, bei aufeinanderfolgenden, an aufeinander folgenden Strichenden innerhalb des Wortes definierten Versuchssegmentierungsstellen solange durchgeführt werden, bis alle Striche verarbeitet wurden.

10. System zur Zeichenerkennung nach Anspruch 9, bei welchem der Zeichenerkenner bei jeder Versuchssegmentierungsstelle jede mögliche an der augenblicklichen Versuchssegmentierungsstelle endende Zeichenstrichfolge sequentiell solange prüft, bis alle möglichen Zeichenstrichfolgen an der augenblicklichen Versuchssegmentierungsstelle geprüft wurden.

11. System zur Zeichenerkennung nach Anspruch 9 oder Anspruch 10, bei welchem die Einteilerlogik eine Liste von Kanditatenzeichenketten zusammenstellt, wobei die Liste gemäß den entsprechenden komulativen Punktezahlen geordnet ist.

12. System zur Zeichenerkennung nach Anspruch 11, bei welchem die Liste von Kanditatenzeichenketten eingeengt ist, um nicht mehr als eine ausgewählte Anzahl von Kandidatenzeichenketten zu enthalten.

13. System zur Zeichenerkennung nach Anspruch 11 oder Anspruch 12, bei welchem die Einteilerlogik jede Kanditatenzeichenkette mit einer Liste annehmbarer Zeichenketten vergleicht und Kanditatenzeichenketten mit keinen entsprechenden annehmbaren Zeichenketten aus der Liste von Kanditatenzeichenketten entfernt sind.

14. System zur Zeichenerkennung nach irgend einem der Ansprüche 8 bis 13 zum Erkennen einzelner handgeschriebener Zeichen, die aus einem oder mehreren Strichen aus einer Mehrzahl von Zeichengruppen bestehen, bei welchem jede Zeichengruppe ein Wort bildet und bei welchem Zeichen innerhalb eines Wortes einander berühren oder überlappen können, wobei das System zur Zeichenerkennung eine Wortsegmentierungslogik zum anfänglichen Segmentieren einzelner Wörter aufweist.

**FIG.1**

*LETTERS ARE RUN TOGETHER*

**FIG.2**

**FIG.3**

17

FIG. 4

EP 0 166 271 B1

FIG.5

FIG. 6